# EUROPÄISCHE PATENTSCHRIFT

(11) **EP 2 128 628 B1**
(45) Veröffentlichungstag und Bekanntmachung des Hinweises auf die Patenterteilung: **01.05.2013**
(21) Anmeldenummer: 09100276.6
(22) Anmeldetag: 11.05.2009
(51) Int. Cl.: G01P 1/02, G01P 3/481, G01D 11/24

(54) **Plombenanordnung**
Seal assembly
Agencement de plombs

(30) Priorität: 26.05.2008 DE 102008025067
(43) Veröffentlichungstag der Anmeldung: 02.12.2009
(73) Patentinhaber: Continental Automotive GmbH, 30165 Hannover (DE)
(72) Erfinder: Busse, Andrea, 78089, Unterkirnach (DE); Plankenhorn, Horst, 78048, Villingen-Schwenningen (DE)

(56) Entgegenhaltungen:
- EP-A1- 1 067 387
- EP-A2- 0 697 681
- EP-A2- 0 923 168
- DE-B3-102006 061 644

## Beschreibung

Die Erfindung bezieht sich auf eine Plombenanordnung für einen Drehwertgeber mit einem im wesentlichen stabförmigen Schutzgehäuse, an welchem für ein Anbringen des Drehwertgebers am Getriebegehäuse eines Fahrzeuges eine Flanschfläche und Schraubverbindungsmittel ausgebildet sind, wobei die Flanschfläche das Schutzgehäuse in einen Sensorabschnitt und einen Sockelabschnitt teilt und der Sockelabschnitt mit einem gegenüber der Flanschfläche abgesetzten Sechskant versehen ist, mit einer aus sechs Wandelementen als Sechskanthülse geformten, insbesondere aus Kunststoff bestehenden Plombe, die im wesentlichen formschlüssig den Sechskant des Schutzgehäuses umgreifend mit dem Schutzgehäuse verbindbar ist, wobei an wenigstens einem Wandelement der Sechskanthülse ein radial nach innen hervorstehendes Rastelement angeordnet ist, das in eine radiale Vertiefung des Schutzgehäuses einrastbar ist, wobei zwei erste sich parallel gegenüberliegende Wandelemente jeweils mit ihren benachbarten Wandelementen quer zur Längsachse der Plombe federungsfähig verbunden sind und wobei die Sechskanthülse ein oder mehrere radial nach innen und/oder radial nach außen hervorstehende Ansätze aufweist.

Eine solche Anordnung ist in der Europäischen Patentanmeldung EP 01 067 387 A1 beschrieben.

Weiter beschreibt die Europäische Patentanmeldung EP 0 923 168 A2 eine Plombiervorrichtung für einen Drehwertgeber, welche durch eine mit einem Gehäuse verdrehfest verbindbare erste Hülse, sowie eine mit der ersten Hülse verrastbare zweite Hülse gebildet wird.

Bei einem derartigen, durch Einschrauben am Messort befestigbaren Drehwertgeber ist üblicherweise mit dem Schutzgehäuse eine Steckerfassung unlösbar verbunden.

Dabei erfolgt die Messwertübertragung beispielsweise zu einem Fahrtschreiber mittels eines mit einem Stecker versehenen mehradrigen Kabels, welches auch Leitungen zur Energieversorgung des Drehwertgebers umfasst und welches mittels einer Überwurfmutter lösbar an der Steckerfassung befestigt wird.

Bei Fahrtschreibern besteht immer die Gefahr der Manipulation der Messwerte um z. B. die Einhaltung der gesetzlich vorgeschriebenen Ruhezeiten vorzutäuschen oder einen Geschwindigkeitsverlauf unterhalb der tatsächlich gefahrenen Geschwindigkeit zu simulieren.

Da Manipulationen nicht grundsätzlich verhindert werden können, sind bei den Messwertübertragungsmitteln verschiedene Maßnahmen üblich, mit denen Veränderungen an den Messwertübertragungsmitteln nachgewiesen und Eingriffe erschwert werden können.

Dazu kann dem Kabel ein gepanzerter Schutzschlauch zugeordnet sein und die Überwurfmutter sowie der Drehwertgeber können jeweils mittels einer Plombe gesichert sein.

Bei der eingangs beschriebenen Plombenanordnung ist der Impulsgeber verplombt.

Ist das Kabel nicht angeschlossen, könnte es mittels eines Werkzeugs zu einem Aufweiten der insbesondere aus Kunststoff bestehenden Plombe und somit zu einem zerstörungsfreien Aushebeln der Rastelemente an der Plombe kommen.

Aufgabe der Erfindung ist es daher eine Plombenanordnung der eingangs genannten Art zu schaffen, durch die auch bei nicht angeschlossenem Kabel der Drehwertgeber gegen Ausschrauben und Manipulation geschützt ist.

Diese Aufgabe wird erfindungsgemäß dadurch gelöst, dass eine topfartige Plombenhaube mit Spiel die Plombe umschließend auf die Plombe aufsteckbar ist und mit der Plombe unlösbar verbindbar oder mit der Plombe unlösbar verbunden ist, wobei der Boden der Plombenhaube an einen Kragen der Plombe zur Anlage kommt und eine zentrische Durchgangsöffnung runden Querschnitts besitzt, deren Durchmesser gleich oder geringer ist, als der Abstand zweier parallel einander gegenüberliegender Wandelemente der Sechskanthülse der Plombe.

Durch diese Plombenhaube werden die Bereiche der Plombe, an denen ein Werkzeug zum Aufweiten der Plombe und zerstörungsfreiem Aushebeln von deren Rastelementen angesetzt werden könnte, abgedeckt.

Die unlösbare Verbindung der Plombenhaube mit der Plombe sichert gegen eine Beseitigung der Plombenhaube.

Die Plombenhaube kann zunächst auf die Plombe aufgesteckt und danach diese vormontierte Baueinheit oder die einteilig ausgebildete Einheit auf den bereits an dem Messort montierten Drehwertgeber bis zum Einrasten der Rastelemente aufgeschoben werden.

Durch das radiale Spiel zwischen Plombe und Plombenhaube kann sich dabei die Plombe elastisch aufweiten und nach dem Einrasten der Rastelemente durch die Plombenhaube geschützt unlösbar mit dem Messwertgeber verbunden sein.

Um die erforderliche radiale Aufweitung zu ermöglichen ist es ausreichend, wenn das Spiel, mit der die Plombenhaube die Plombe umschließt, zumindest annähernd der radialen Erstreckung der Rastelemente der Sechskanthülse entspricht.

Eine einfache Möglichkeit zur radialen Aufweitung der Plombe besteht darin, dass die zwei sich parallel gegenüberliegenden Wandelemente über radial nach außen gewölbte Übergangsbereiche jeweils mit ihren benachbarten Wandelementen quer zur Längsachse der Plombe federungsfähig verbunden sind.

Zum Schutz der Übergangsbereiche können die Übergangsbereiche an ihren dem Sensorabschnitt abgewandten Enden durch quer zur Längsachse der Plombe sich erstreckende Lappen der Plombe abgedeckt sein.

Vorzugsweise besteht die Plombenhaube aus einem Kunststoff.

Zum unlösbaren Verbinden der Plombenhaube mit der Plombe ist es möglich, dass die Plombenhaube mittels Reibschweißen mit der Plombe verbindbar ist.

Eine weitere Möglichkeit besteht darin, dass Plombenhaube und Plombe mittels einer oder mehreren von der Plombenhaube nach außen abgedeckten Rastverbindungen verbindbar ist, wobei die Abdeckung der Rastverbindungen nach außen einen Zugang zu diesen Rastverbindungen verhindert.

In einer einfachen Ausbildung besteht die Rastverbindung darin, dass die Plombe innerhalb ihrer Sechskanthülse und/oder ihrer Übergangsbereiche nach innen hervorstehende erste Ansätze aufweist, die von entsprechenden radial nach außen gerichteten erste Rasthaken der Plombierhaube, eine von dem Sensorabschnitt entfernende Verschiebung der Plombenhaube blockierend, hintergreifbar sind, wobei in Doppelfunktion die die Übergangsbereiche abdeckenden Lappen der Plombe die Ansätze bilden können.

Eine weitere einfache Ausbildung der Rastverbindung besteht darin, dass die Plombe von der Sechskanthülse einen oder mehrere radial nach außen hervorstehende zweite Ansätze aufweist, die von entsprechenden radial nach innen gerichteten zweiten Rasthaken der Plombenhaube, eine von dem Sensorabschnitt entfernende Verschiebung der Plombenhaube blockierend, hintergreifbar sind.

Es versteht sich, dass in Kombination auch beide Ausführungen der Rastverbindung zur Anwendung kommen können.

Bei der Anwendung des Reibschweißens zur Verbindung von Plombe und Plombierhaube können die zweiten Ansätze an dem dem Sensorabschnitt abgewandten Ende der Plombe angeordnet sein und durch Reibschweißen mit dem Boden der Plombenhaube verbindbar sein.

In einfacher Weise kann die radiale Vertiefung des Schutzgehäuses durch eine radial umlaufende Schulter am dem Sensorabschnitt zugewandten Ende des Sechskants des Schutzgehäuses gebildet sein, die von dem Rastelement der Sechskanthülse, eine von dem Sensorabschnitt entfernende Verschiebung der Plombe blockierend, hintergreifbar ist.

Zur Erhöhung der Sicherheit gegen Manipulation sind vorzugsweise der Sockelabschnitt axial zumindest weitgehend von der Plombe und die Plombe von der Plombenhaube zumindest weitgehend axial abdeckbar.

Ein Ausführungsbeispiel der Erfindung ist in der Zeichnung dargestellt und wird im Folgenden näher beschrieben. Es zeigen:
- Figur 1: Ansichten der am Einbauort miteinander zu verbindenden Bauteile eines Drehwertgebers in ihrer Montagefolge,
- Figur 2: eine Draufsicht der Plombe in Achsrichtung,

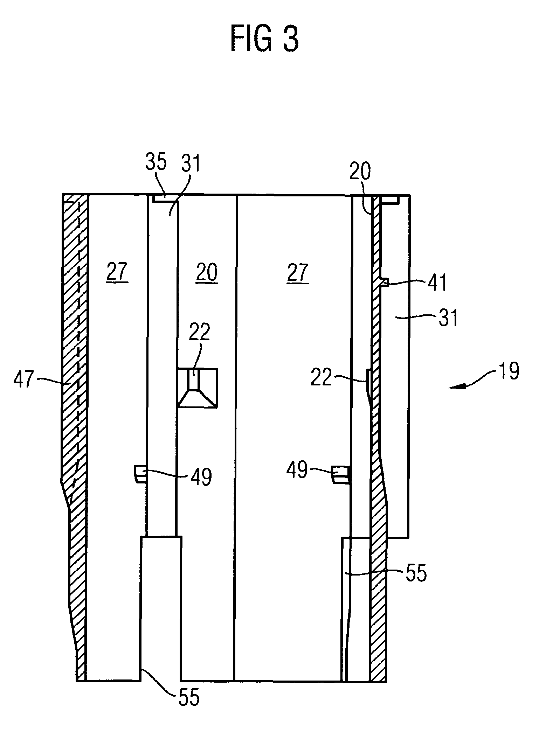

- Figur 3: einen Schnitt entlang der Linie II - II in Figur 2,

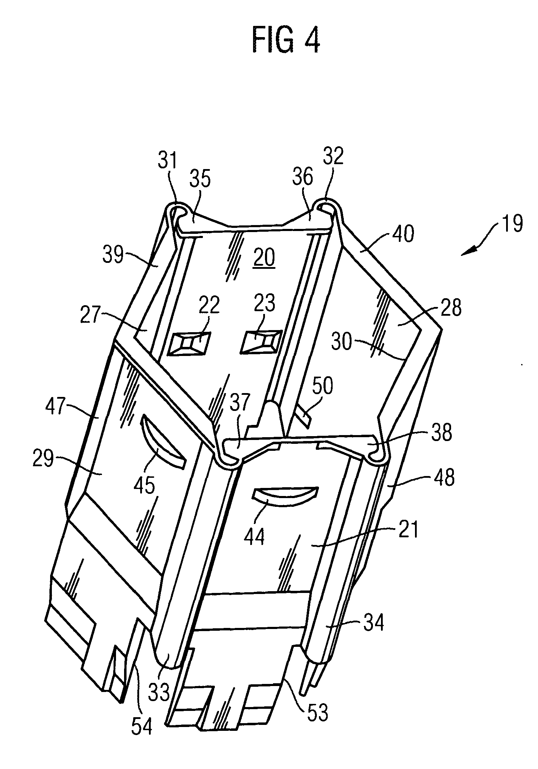

- Figur 4: eine perspektivische Darstellung der Plombe mit einer Sicht auf die von der Flanschfläche des Schutzgehäuses abgewandten Stirnfläche,

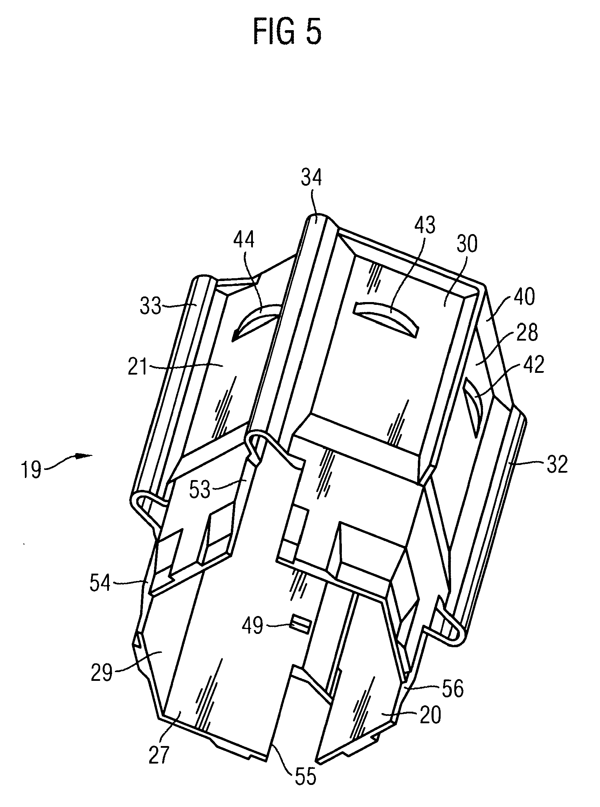

- Figur 5: eine perspektivische Darstellung der Plombe mit einer Sicht auf die der Flanschfläche des Schutzgehäuses zugewandten Stirnfläche,

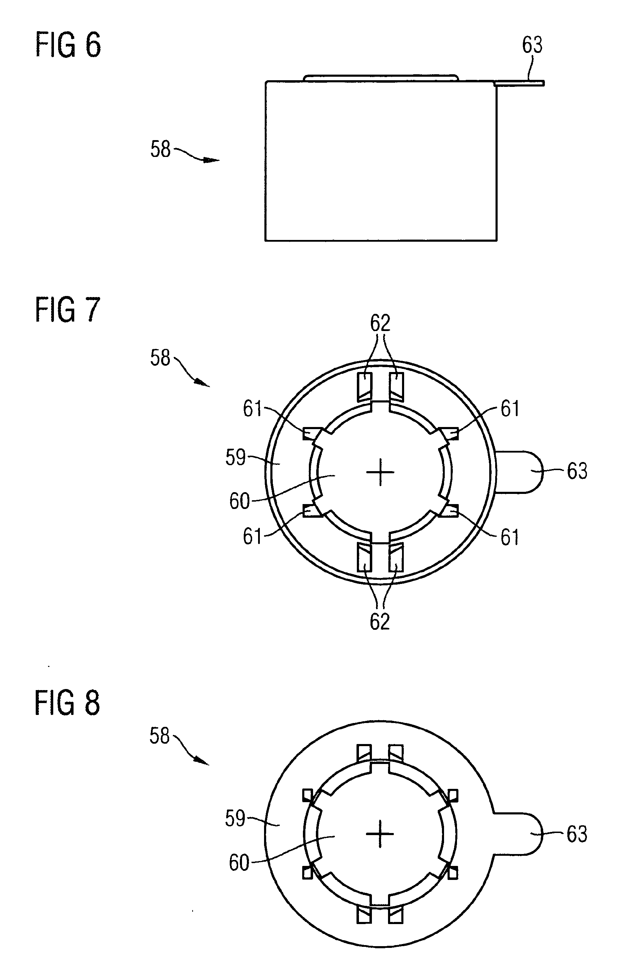

- Figur 6: eine Seitenansicht einer Plombenhaube der Plombenanordnung nach Figur 1,
- Figur 7: eine Untenansicht der Plombenhaube nach Figur 6,
- Figur 8: eine Draufsicht der Plombenhaube nach Figur 6,

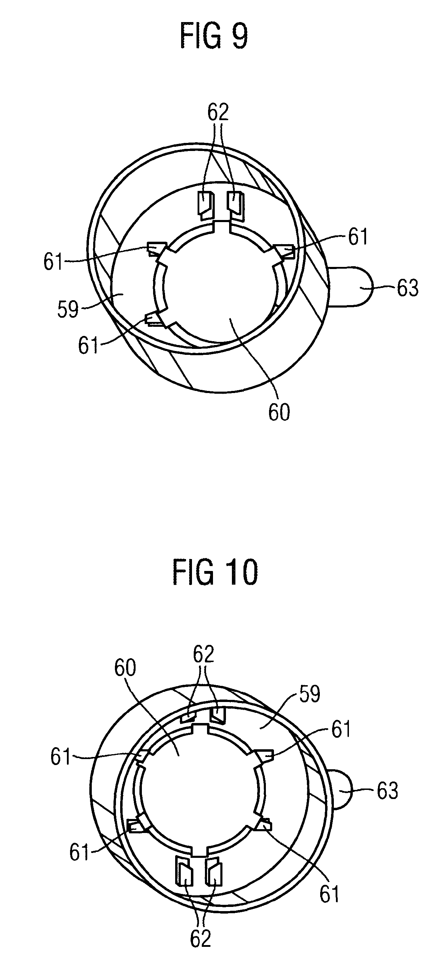

- Figur 9: eine erste perspektivische Ansicht der Plombenhaube nach Figur 6,
- Figur 10: eine zweite perspektivische Ansicht der Plombenhaube nach Figur 6,

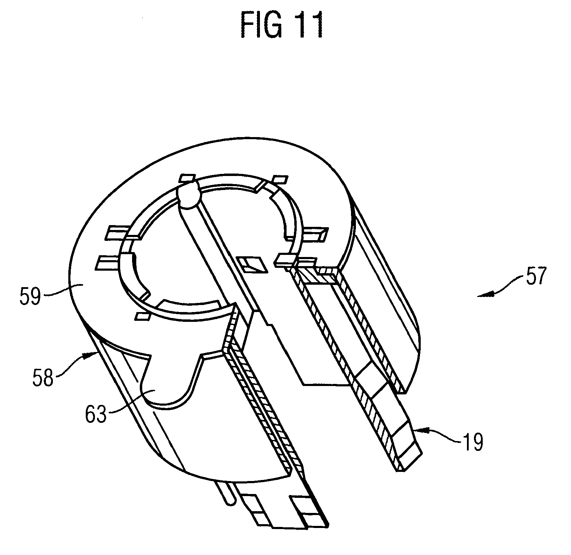

- Figur 11: eine teilaufgeschnittene perspektivische Ansicht der zweiten Baugruppe aus Plombe und Plombenhaube der Plombenanordnung nach Figur 1.

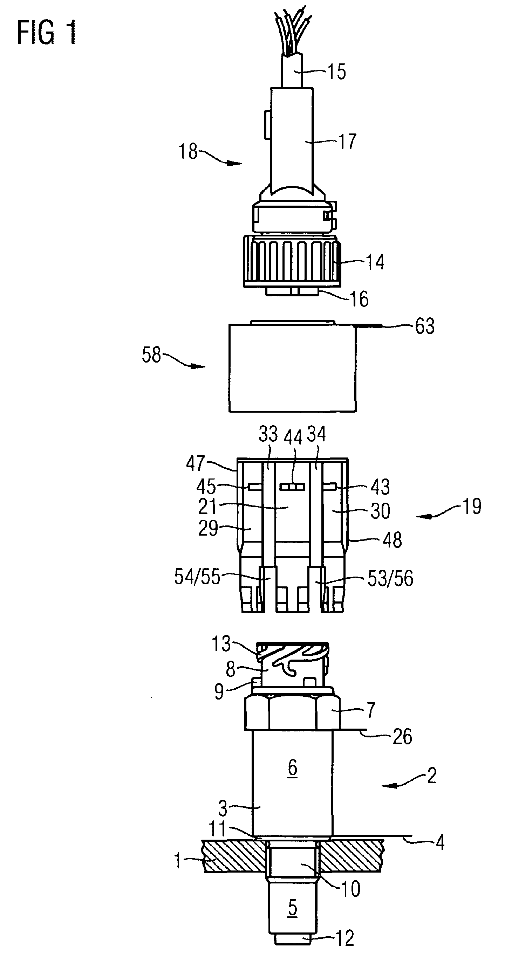

Die Übersichtsdarstellung der Figur 1 zeigt einen in ein Wandelement 1 eines Getriebegehäuses eingeschraubten Drehwertgeber 2, dessen Schutzgehäuse 3 gestuft ausgebildet ist. Eine Flanschfläche 4 teilt das Schutzgehäuse 3 in einen im eingebauten Zustand des Drehwertgebers 2 in das Getriebegehäuse hineinragenden Sensorabschnitt 5 und einen außerhalb des Getriebegehäuses befindlichen Sockelabschnitt 6. An letzterem ist ein Sechskant 7 ausgebildet und eine Steckerfassung 8 beispielsweise durch Anbördeln befestigt, wobei mehrere Nasen, von denen eine mit 9 bezeichnet ist, als Verdrehsicherung dienen. Mit 10 ist ein Gewinde bezeichnet, mittels dessen der Drehwertgeber 2 im Wandelement 1 üblicherweise unter Verwendung einer Zwischenlegscheibe 11 befestigt ist. Das Bezugszeichen 12 bezeichnet eine stirnseitig dem Sensorabschnitt 5 zugeordnete nichtmagnetische Kappe 12, die die Messmittel beispielsweise einen Hallgenerator/Permanentmagnet-Kombination, abdeckt. An der Steckerfassung 8 ausgebildete Längsverbindungsstrukturen 13 dienen in an sich bekannter Weise dem Befestigen einer Überwurfmutter 14, mit welcher ein ein mehradriges Kabel 15 abschließender Stecker 16 in der Steckerfassung 8 des Drehwertgebers festgehalten wird. Das mit der Figur 1 dargestellte Ausführungsbeispiel weist zusätzlich ein der Zugentlastung dienendes Klemmteil 17 auf, das beispielsweise zweischalig ausgebildet ist und nach dem Verrasten der beiden Schalen einerseits das Kabel 15 festspannt und andererseits einen am Stecker ausgebildeten Bund übergreift. Das heißt, mit dem Drehwertgeber 2 ist eine vormontierbare erste Baugruppe 18, bestehend aus dem mit dem Stecker 16 verbundenen Kabel 15, der lose auf dem Stecker 16 gehalterten Überwurfmutter 14 und dem nicht zwingend erforderlichen Klemmteil 17 verbindbar.

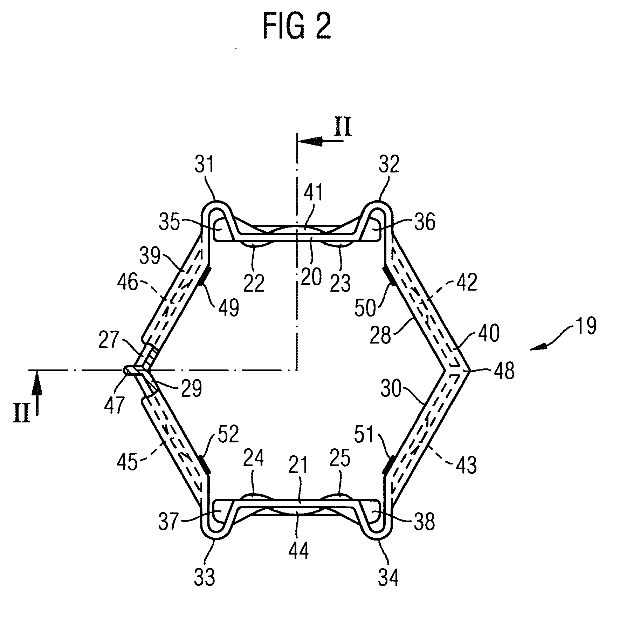

Zuvor ist jedoch eine zweite vormontierte Baugruppe 57 aus einer Plombe 19 und einer Plombenhaube 58 auf den Sockelabschnitt 6 aufzusetzen, wobei die Plombe 19 mit dem Sockelabschnitt 6 verrastet. Dabei greifen an gegenüberliegenden Wandelementen 20, 21 der als Sechskanthülse ausgebildeten Plombe 19 angeformte erste Rastelemente 22 bis 25 hinter der in Richtung des Sensorabschnitt 5 weisenden Stirnfläche 26 des Sechskants 7 ein. Um dies bei der in Bezug auf den Sechskant 7 formschlüssig ausgebildeten Plombe 19 zu ermöglichen, ist die Plombe 19 federungsfähig ausgestaltet. Dabei stehen, wie vorzugsweise in Figur 2 ersichtlich ist, die den Wandelementen 20, 21 benachbarten Wandelemente 27, 28 und 29, 30 über nach außen gewölbte Übergangsbereiche 31 bis 34 miteinander in Verbindung. Die Übergangsbereiche 31 bis 34 sind stirnseitig mittels Lappen 35 bis 38 abgedeckt, die jeweils einen Eingriffschutz bilden bzw. einen Eingriffnachweis bezüglich der durch die gewölbten Übergangsbereiche 31 bis 34 geschaffenen, nicht näher bezeichneten Hohlräume dienen. In gleicher Weise verhindert, wenn er nicht beschädigt worden ist, ein an der Plombe 19 wenigsten teilweise umlaufender Kragen bzw. ein zweiteiliger Kragen 39, 40 die Anwendung eines mit Freisparungen für die Übergangsbereiche 31 bis 34 versehenen Steckschlüssels um die Schraubverbindung des Drehwertgebers 2 zu lösen.

Hindernisse bezüglich des Ansetzens eines Werkzeugs bzw. Erschwernisse im Hinblick auf die Herstellung eines beispielsweise zangenartigen Spezialwerkzeugs bilden an den Wandelementen 27 bis 30 ausgebildete, nach außen weisende zungenförmige Vorsprünge 41 bis 46 sowie an den Schneidungskanten der nicht federungsfähig miteinander verbundenen Wandelemente 27, 29 sowie 28, 30 vorgesehene Rippen 47, 48. Selbstverständlich lassen sich an den Wandelementen 20, 21 und 27 bis 30 und ggf. unterschiedlich gestaltete Vorsprünge ausbilden, um die Herstellung eines für Manipulationszwecke vorgesehenen Werkzeugs zu erschweren, bzw. um die Auflagefläche eines derartigen Werkzeugs soweit zu verringern, dass die Flächenpressung, die aufgrund des für ein Lösen des Drehwertgebers erforderlichen hohen Drehmoments entsteht, so groß ist, dass eine Deformation der Auflagefläche des betreffenden Werkzeugs erfolgt und auf diese Weise ein Manipulationsversuch nachweisbar ist.

Sekundäre Rastelemente 49 bis 52, die gegenüber den Rastelementen 22 bis 25 axial versetzt und beim ordnungsgemäßen Sitz der Plombe 19 auf dem Drehwertgeber 2 funktionslos sind, stellen eine zusätzliche Maßnahme dar, die beschädigungsfreies axiales Abziehen der Plombe 19 verhindert. Sie treten dann in Funktion, wenn es unter Ausnutzung von Spiel und einer gewissen elastischen Verformbarkeit gelungen wäre, die sozusagen primären Rastelemente 22 bis 25 ohne Beschädigung der Plombe 19 außer Eingriff zu bringen.

Der Vollständigkeit halber sei noch erwähnt, dass die Plombe 19 den Sockelabschnitt 6 des Drehwertgebers 2 weitgehend abdeckt und durch lediglich Aufstecken selbstsichernd montierbar ist. Dabei ist das Aufstecken auf den Sechskant 7 durch die erforderliche Ausformkonizität sowie Freisparungen 53 bis 56 erleichtert. Die Freisparungen 53 bis 56 sind außerdem dafür vorgesehen, dass die Plombe 19 auch dann Anwendung finden kann, wenn der Drehwertgeber in Winkeln oder engen Nischen des Getriebegehäuses montiert ist.

Die zweite Baugruppe 57 besteht aus der Plombe 19 und der topfartigen Plombenhaube 58, die mit Spiel die Plombe 19 umschließend auf die Plombe 19 aufgesteckt ist.

Der Boden 59 der Plombenhaube 58 weist eine zentrische Durchgangsöffnung 60 runden Querschnitts auf, deren Durchmesser gleich dem Abstand zweier parallel einander gegenüberliegender Wandelemente 21, 22 der Sechskanthülse der Plombe 19 ist.

Der Innendurchmesser der Plombenhaube 58 entspricht der doppelten radialen Erstreckung der ersten Rastelemente 22 bis 25.

Die Plombenhaube 58 wird soweit von der Seite der Steckerfassung 8 her auf die Plombe 19 aufgesteckt, bis sie mit ihrem Boden 59 an den Kragen 38, 39 der Plombe 19 zur Anlage kommt.

Dabei rasten radial nach außen gerichtete erste Rasthaken 61 der Plombierhaube 59 hinter die Lappen 35 bis 38 der Plombe 19 sowie radial nach innen gerichtete zweite Rasthaken 62 hinter die Kragen 39 und 40 der Plombe 19, so dass die Plombenhaube 58 mit der Plombe 19 verbunden ist und die zweite Baugruppe 57 bildet.

Diese Rastungen der Rasthaken 61 und 62 sind durch die radiale Federungsfähigkeit der Wandelemente möglich.

Ist die zweite Baugruppe 57 auf den Sockelabschnitt 6 aufgeschoben und die ersten Rastelemente 22 bis 25 die Stirnfläche 26 hintergreifend eingerastet, ist durch das geringe Spiel zwischen der Sechskanthülse der Plombe 19 und der Plombenhaube 58 kein ausreichender Federweg der Wandelemente mehr gegeben, so dass Plombe 19 und Plombenhaube 58 unlösbar miteinander verbunden sind.

Im Bereich des Bodens 59 ist an der Plombenhaube 58 radial nach außen hervorstehend eine Lasche 63 zum Anbringen einer Kennzeichnung vorgesehen.

Bei einer einteiligen Ausbildung kann der Boden 59 der Plombenhaube 58 z. B. durch Reibschweißen mit den Kragen 39 der Plombe 19 verbunden sein.

## Patentansprüche

1. Plombenanordnung für einen Drehwertgeber (2) mit einem im Wesentlichen stabförmigen Schutzgehäuse (3), an welchem für ein Anbringen des Drehwertgebers (2) am Getriebegehäuse eines Fahrzeuges eine Flanschfläche (4) und Schraubverbindungsmittel ausgebildet sind, wobei die Flanschfläche (4) das Schutzgehäuse (3) in einen Sensorabschnitt (5) und einen Sockelabschnitt (6) teilt und der Sockelabschnitt (6) mit einem gegenüber der Flanschfläche (4) abgesetzten Sechskant (7) versehen ist, mit einer aus sechs Wandelementen (20, 21, 27 - 30) als Sechskanthülse geformten, insbesondere aus Kunststoff bestehenden Plombe (19), die im Wesentlichen formschlüssig den Sechskant (7) des Schutzgehäuses (3) umgreifend mit dem Schutzgehäuse (3) verbindbar ist, wobei an wenigstens einem Wandelement der Sechskanthülse ein radial nach innen hervorstehendes Rastelement (22, 23, 24, 25) angeordnet ist, das in eine radiale Vertiefung des Schutzgehäuses (3) einrastbar ist, wobei zwei erste sich parallel gegenüberliegende Wandelemente jeweils mit ihren benachbarten Wandelementen (27 - 30) quer zur Längsachse der Plombe (19) federungsfähig verbunden sind und wobei die Sechskanthülse ein oder mehrere radial nach innen und/oder radial nach außen hervorstehende Ansätze aufweist, **dadurch gekennzeichnet, dass** eine topfartige Plombenhaube (58) mit Spiel die Plombe (19) umschließend auf die Plombe (19) aufsteckbar ist und mit der Plombe (19) unlösbar verbindbar oder mit der Plombe einteilig verbunden ist, wobei der Boden (59) der Plombenhaube (58) an einen Kragen (38, 39) der Plombe (19) zur Anlage kommt und eine zentrische Durchgangsöffnung (60) runden Querschnitts besitzt, deren Durchmesser gleich oder geringer ist, als der Abstand zweier parallel einander gegenüberliegender Wandelemente (20, 21) der Sechskanthülse der Plombe (19).

2. Plombenanordnung nach Anspruch 1, **dadurch gekennzeichnet, dass** das Spiel, mit der die Plombenhaube (58) die Plombe (19) umschließt, zumindest annähernd der radialen Erstreckung der Rastelemente (22-25) der Sechskanthülse entspricht.

3. Plombenanordnung nach einem der vorhergehenden Ansprüche, **dadurch gekennzeichnet, dass** die zwei sich parallel gegenüberliegenden Wandelemente (20, 21) über radial nach außen gewölbte Übergangsbereiche (31-34) jeweils mit ihren benachbarten Wandelementen (27-30) quer zur Längsachse der Plombe (19) federungsfähig verbunden sind.

4. Plombenanordnung nach Anspruch 3, **dadurch gekennzeichnet, dass** die Übergangsbereiche (31-34) an ihren dem Sensorabschnitt (5) abgewandten Enden durch quer zur Längsachse der Plombe (19) sich erstreckende Lappen (35-40) der Plombe (19) abgedeckt sind.

5. Plombenanordnung nach einem der vorhergehenden Ansprüche, **dadurch gekennzeichnet, dass** die Plombenhaube (58) aus einem Kunststoff besteht.

6. Plombenanordnung nach Anspruch 5, **dadurch gekennzeichnet, dass** die Plombenhaube mittels Reibschweißen mit der Plombe verbindbar ist.

7. Plombenanordnung nach einem der Ansprüche 1 bis 5, **dadurch gekennzeichnet, dass** Plombenhaube (58) und Plombe (19) mittels einer oder mehreren von der Plombenhaube (58) nach außen abgedeckten Rastverbindungen verbindbar ist.

8. Plombenanordnung nach Anspruch 7, **dadurch gekennzeichnet, dass** die Plombe (19) innerhalb ihrer Sechskanthülse und/oder ihrer Übergangsbereiche (31-34) nach innen hervorstehende erste Ansätze aufweist, die von entsprechenden radial nach außen gerichteten erste Rasthaken (61) der Plombierhaube (58) eine von dem Sensorabschnitt (5) entfernende Verschiebung der Plombenhaube (58) blockierend hintergreifbar sind.

9. Plombenanordnung nach Anspruch 8, **dadurch gekennzeichnet, dass** die die Übergangsbereiche (31-34) abdeckenden Lappen (35-38) der Plombe (19) die Ansätze bilden.

10. Plombenanordnung nach Anspruch 7, **dadurch gekennzeichnet, dass** die Plombe (19) von der Sechskanthülse einen oder mehrere radial nach außen hervorstehende zweite Ansätze aufweist, die von entsprechenden radial nach innen gerichteten zweiten Rasthaken (62) der Plombenhaube (58) eine von dem Sensorabschnitt (5) entfernende Verschiebung der Plombenhaube (58) blockierend hintergreifbar sind.

11. Plombenanordnung nach einem der Ansprüche 6 und 10, **dadurch gekennzeichnet, dass** die zweiten Ansätze an dem dem Sensorabschnitt abgewandten Ende der Plombe angeordnet sind und durch Reibschweißen mit dem Boden der Plombenhaube verbindbar ist.

12. Plombenanordnung nach einem der vorhergehenden Ansprüche, **dadurch gekennzeichnet, dass** die radiale Vertiefung des Schutzgehäuses durch eine radial umlaufende Schulter am dem Sensorabschnitt (5) zugewandten Ende des Sechskants des Schutzgehäuses (3) gebildet ist, die von dem Rastelement (22-25) der Sechskanthülse eine von dem Sensorabschnitt (5) entfernende Verschiebung der Plombe (19) blockierend hintergreifbar ist.

13. Plombenanordnung nach einem der vorhergehenden Ansprüche, **dadurch gekennzeichnet, dass** der Sockelabschnitt (6) axial zumindest weitgehend von der Plombe (19) abdeckbar ist.

14. Plombenanordnung nach einem der vorhergehenden Ansprüche, **dadurch gekennzeichnet, dass** die Plombe (19) von der Plombenhaube (58) zumindest weitgehend axial abdeckbar ist.

## Claims

1. Seal arrangement for a rotational speed sensor (2) having a substantially rod-like protective housing (3) on which a flange face (4) and screw connection means are formed in order to fit the rotational speed sensor (2) to the gear housing of a vehicle, the flange face (4) dividing the protective housing (3) into a sensor portion (5) and a base portion (6) and the base portion (6) being provided with a hexagonal member (7) which is recessed relative to the flange face (4), having a seal (19) which is formed by six wall elements (20, 21, 27 - 30) as a hexagonal sleeve and which in particular comprises plastics material and which can be connected to the protective housing (3) so as to engage around the hexagonal member (7) of the protective housing (3) in a substantially positive-locking manner, there being arranged on at least one wall element of the hexagonal sleeve a radially inwardly protruding catch element (22, 23, 24, 25), which can be engaged in a radial recess of the protective housing (3), two first mutually opposing parallel wall elements each being connected in a resilient manner to the adjacent wall elements (27-30) transversely relative to the longitudinal axis of the seal (19), and the hexagonal sleeve having one or more radially inwardly and/or radially outwardly protruding attachments,
**characterised in that**
a pot-like seal cover (58) can be placed on the seal (19) so as to surround the seal (19) with play and can be connected to the seal (19) in a non-releasable manner or is connected to the seal in an integral manner, the base (59) of the seal cover (58) moving into abutment against a collar (38, 39) of the seal (19) and having a central through-opening (60) with a round cross-section whose diameter is the same as or smaller than the spacing of two mutually opposing parallel wall elements (20, 21) of the hexagonal sleeve of the seal (19).

2. Seal arrangement according to Claim 1, **characterised in that** the play with which the seal cover (58) surrounds the seal (19) at least substantially corresponds to the radial extent of the catch elements (22 - 25) of the hexagonal sleeve.

3. Seal arrangement according to either of the preceding claims, **characterised in that** the two mutually opposing parallel wall elements (20, 21) are connected in a resilient manner to the adjacent wall elements (27 - 30) thereof transversely relative to the longitudinal axis of the seal (19) by means of radially outwardly curved transition regions (31 - 34).

4. Seal arrangement according to Claim 3, **characterised in that** the transition regions (31 - 34) are covered at the ends thereof facing away from the sensor portion (5) by means of tabs (35 - 40) of the seal (19) that extend transversely relative to the longitudinal axis of the seal (19).

5. Seal arrangement according to any one of the preceding claims, **characterised in that** the seal cover (58) comprises a plastics material.

6. Seal arrangement according to Claim 5, **characterised in that** the seal cover
can be connected to the seal by means of friction welding.

7. Seal arrangement according to any one of Claims 1 to 5, **characterised in that**
the seal cover (58) and the seal (19) can be connected by means of one or more catch connections which are covered towards the outer side by the seal cover (58).

8. Seal arrangement according to Claim 7, **characterised in that** the seal (19) has first attachments which protrude inwards within the hexagonal sleeve and/or the transition regions (31-34) thereof and behind which corresponding radially outwardly directed first catch hooks (61) of the seal cover (58) can engage so as to block a displacement of the seal cover (58) away from the sensor portion (5).

9. Seal arrangement according to Claim 8, **characterised in that** the tabs (35 - 38) of the seal (19) that cover the transition regions (31 - 34) form the attachments.

10. Seal arrangement according to Claim 7, **characterised in that** the seal (19) of the hexagonal sleeve has one or more second attachments which protrude radially outwards and behind which corresponding radially inwardly directed second catch hooks (62) of the seal cover (58) can engage so as to block a displacement of the seal cover (58) away from the sensor portion (5).

11. Seal arrangement according to either Claim 6 or 10, **characterised in that** the second attachments are arranged at the end of the seal facing away from the sensor portion and can be connected to the base of the seal cover by means of friction welding.

12. Seal arrangement according to any one of the preceding claims, **characterised in that** the radial recess of the protective housing is formed at the end of the hexagonal member of the protective housing (3) facing the sensor portion (5) by a radially continuous shoulder, behind which the catch element (22 - 25) of the hexagonal sleeve can engage so as to block a displacement of the seal (19) away from the sensor portion (5).

13. Seal arrangement according to any one of the preceding claims, **characterised in that** the base portion (6) can be at least substantially axially covered by the seal (19).

14. Seal arrangement according to any one of the preceding claims, **characterised in that** the seal (19) can be at least substantially axially covered by the seal cover (58).

## Revendications

1. Agencement de plomb pour un indicateur (2) de valeurs de rotation, comprenant un boîtier (3) de protection sensiblement en forme de barre, sur lequel sont formés, pour une application de l'indicateur (2) de valeurs de rotation au carter de transmission d'un véhicule, une surface (4) de bride et des moyens de vissage, la surface (4) de bride subdivisant le boîtier (3) de protection en une partie (5) de capteur et en une partie (6) de socle et la partie (6) de socle étant munie d'un six pans (7) en retrait par rapport à la surface (4) de bride, comprenant un plomb (19), qui est formé en tant que douille à six pans de six éléments (20, 21, 27 à 30) de paroi, qui est constitué notamment en matière plastique et qui peut être relié au boîtier (3) de protection en entourant sensiblement à complémentarité de forme le six pans (7) du boîtier (3) de protection, un élément (22, 23, 24, 25) d'encliquetage, qui fait saillie radialement vers l'intérieur et qui peut s'encliqueter dans une cavité radiale du boîtier (3) de protection, étant monté sur au moins un élément de paroi de la douille à six pans, deux premiers éléments de paroi opposés parallèlement étant reliés avec élasticité transversalement à l'axe longitudinal du plomb (19) à leurs éléments (27 à 30) de paroi voisins et la douille à six pans ayant un ou plusieurs prolongements faisant saillie radialement vers l'intérieur et/ou radialement vers l'extérieur, **caractérisé en ce qu'**un capot (58) de plomb en forme de pot peut être emmanché sur le plomb (19) en entourant le plomb (19) avec jeu et peut être relié indissolublement au plomb (19) ou être d'une seule pièce avec le plomb, le fond (59) du capot (58) de plomb venant en appui sur un collet (38, 39) du plomb (19) et une ouverture (60) centrée de passage a des sections transversales circulaires, dont le diamètre est inférieur ou égal à la distance entre deux éléments (20, 21) de paroi opposés l'un à l'autre parallèlement de la douille à six pans du plomb (19).

2. Agencement de plomb suivant la revendication 1, **caractérisé en ce que** le jeu par lequel le capot (58) de plomb entoure le plomb (19) correspond à peu près à l'étendue radiale des éléments (22 à 25) d'encliquetage de la douille à six pans.

3. Agencement de plomb suivant l'une des revendications précédentes, **caractérisé en ce que** les deux éléments (20, 21) de paroi opposés parallèlement sont reliés avec élasticité transversalement à l'axe longitudinal du plomb (19) respectivement à leurs éléments (27 à 30) de paroi voisins par des zones (31 à 34) de transition courbés radialement vers l'extérieur.

4. Agencement de plomb suivant la revendication 3, **caractérisé en ce que** les zones (31 à 34) de transition sont recouvertes à leur extrémité éloignée de la partie (5) de capteur par des pattes (35 à 40) du plomb (19) s'étendant transversalement à l'axe longitudinal du plomb (19).

5. Agencement de plomb suivant l'une des revendications précédentes, **caractérisé en ce que** le capot (58) du plomb est en une matière plastique.

6. Agencement de plomb suivant la revendication 5, **caractérisé en ce que** le capot du plomb peut être relié au plomb par un soudage par friction.

7. Agencement de plomb suivant l'une des revendications 1 à 5, **caractérisé en ce que** le capot (58) du plomb et le plomb (19) peuvent être reliés au moyen d'un ou de plusieurs encliquetages recouverts vers l'extérieur par le capot (58) de plomb.

8. Agencement de plomb suivant la revendication 7, **caractérisé en ce que** le plomb (19) a, à l'intérieur de sa douille à six pans et/ou de ses zones (31 à 34) de transition, des premiers prolongements en saillie vers l'intérieur, qui peuvent être accrochés par des premiers crochets (61) d'encliquetage dirigés radialement vers l'extérieur du capot (58) de plomb en bloquant un déplacement du capot (58) de plomb l'éloignant de la partie (5) de capteur.

9. Agencement de plomb suivant la revendication 8, **caractérisé en ce que** les pattes (35 à 38) du plomb (19) recouvrant les zones (31 à 34) de transition forment les prolongements.

10. Agencement de plomb suivant la revendication 7, **caractérisé en ce que** le plomb (19) a, à partir de la douille à six pans, un ou plusieurs deuxièmes prolongements en saillie radialement vers l'extérieur, qui peuvent être accrochés par des deuxièmes crochets (62) d'encliquetage dirigés radialement vers l'intérieur du capot (58) de plomb en bloquant un déplacement du capot (58) de plomb l'éloignant de la partie (5) de capteur.

11. Agencement de plomb suivant l'une des revendications 6 et 10, **caractérisé en ce que** les deuxièmes prolongements sont disposés à l'extrémité du plomb éloigné de la partie de capteur et peuvent être reliés au fond du capot du plomb par des soudures par friction.

12. Agencement de plomb suivant l'une des revendications précédentes, **caractérisé en ce que** la cavité radiale du boîtier de protection est formée par un épaulement faisant le tour radialement à l'extrémité, tournée vers la partie (5) de capteur, du six pans du boîtier (3) de protection, épaulement qui peut être accroché par l'élément (22 à 25) d'encliquetage de la douille à six pans en bloquant un déplacement du plomb (19) l'éloignant de la partie (5) de capteur.

13. Agencement de plomb suivant l'une des revendications précédentes, **caractérisé en ce que** la partie (6) de socle peut être recouverte axialement, au moins dans une grande mesure, par le plomb (19).

14. Agencement de plomb suivant l'une des revendications précédentes, **caractérisé en ce que** le plomb (19) peut être recouvert axialement, au moins dans une grande mesure, par le capot (58) du plomb.
